# EUROPEAN PATENT SPECIFICATION

(11) **EP 1 482 124 B1**
(45) Date of publication and mention of the grant of the patent: **21.03.2007**
(21) Application number: 04101359.0
(22) Date of filing: 01.04.2004
(51) Int. Cl.: E21B 43/10, E21B 17/08, E21B 17/043

(54) **Non-rotating expandable connection with collapsing type seal**
Nicht rotierende erweiterbare Verbindung mit verformbarer Dichtung
Raccord expansible non rotatif avec joint de type déformable

(30) Priority: 01.04.2003 US 404800
(43) Date of publication of application: 01.12.2004
(73) Proprietor: Hydril Company, Houston, Texas 77032 (US)
(72) Inventor: SIVLEY, Robert S., Kingwood, TX Texas 77345 (US); GREENIP, John F., Houston, TX Texas 77071-2707 (US); REYNOLDS, Harris A. Jr., Houston, TX Texas 77055 (US)
(74) Representative: Weihs, Bruno Konrad

(56) References cited:
- EP-A- 1 106 778
- WO-A-97/21901
- US-A- 5 785 357
- US-A1- 2003 106 618

## Description

### Background of Invention

### Field of the Invention

The invention is related to threaded tubular joints usable in oil and gas well drilling and production, such as tubing, casing, line pipe, and drill pipe, commonly known collective ly as oilfield tubular goods. More particularly, the invention relates to a seal for tubular joints for connecting male (pin) and female (box) members.

### Background Art

Threaded tubular connections are used for joining segments of conduits end-to-end to form a continuous conduit for transporting fluid under pressure. Oilfield tubular goods generally use such threaded connections for connecting adjacent sections of conduit or pipe. Examples of such threaded end connections designed for use on oilfield tubular goods are disclosed in U.S. Patent Nos. 2,239,942; 2,992,019; 3,359,013; RE 30,647; and RE 34,467, all of which are assigned to the assignee of this invention.

In U.S. Patent No. RE 30,647 issued to Blose, a particular thread form or structure is disclosed for a tubular connection that provides an unusually strong joint while controlling the stress and strain in connected "pin" (male thread) and "box" (female thread) members to within acceptable levels. The pin member has at least one generally dovetail-shaped external thread whose width increases in one direction along the pin, while the box member has at least one matching generally dovetail-shaped internal thread whose width increases in the other direction. The mating set of helical threads provide a wedge-like engagement of opposing pin and box thread flanks that limit the extent of relative rotation between the pin and box members, and define a forcible make-up condition that completes the connection. In this thread structure, the angles of the flank shoulder, as well as the thread width, can be used to control the stress and strain preload conditions induced in the pin and box members for a given make-up torque. Thus, by tailoring the thread structure to a particular application or use, the tubular connection or joint is limited only by the properties of the materials selected.

As shown in Figure 1of a prior art document (EP 1 106 778) assigned to the present applicant, and in figure 1 of the present application a tubular connection 10 includes a pin member 11 and a box member 12. Box member 12 has a tapered, internal, generally dovetail-shaped thread structure 14 formed thereon which is adapted for engaging complementary tapered, external, generally dovetail-shaped thread structure 15 formed on pin member 11 to mechanically secure the box 12 and pin 11 members in a releasable manner.

Internal thread 14 on the box member 12 has stab flanks 18, load flanks 16, roots 20, and crests 24. The thread 14 increases in width progressively at a uniform rate in one direction over substantially the entire helical length of thread 14. External thread 15 of pin member 11 has stab flanks 19, load flanks 17, roots 21, and crests 25. The thread 15 increases in width progressively at a uniform rate in the other direction over substantially the entire helical length of thread 15. The oppositely increasing thread widths and the taper of threads 14 and 15, cause the complementary roots and crests of the respective threads 14 and 15 to move into engagement during make-up of the connection 10 in conjunction with the moving of complementary stab and load flanks into engagement upon make-up of the connection.

The pin member 11 or the box member 12 defines the longitudinal axis 13 of the made-up connection 10. The roots and crests of the box and pin members are flat and parallel to the longitudinal axis of the connection and have sufficient width to prevent any permanent deformation of the threads when the connection is made up.

An important part of any connection is a seal for keeping the conduit fluid pressure-tight at the connections. Typically connections will be designed to include metal-to-metal seals therein. Metal-to-metal seals have the advantage of not requiring gaskets or other additional sealing devices, which would typically have to be replaced periodically as the connections are coupled and uncoupled. Metal seals are created when contact pressure between two metal surfaces exceeds the fluid pressure to be sealed. Typically the contact pressures are created during make up of the connection.

More recently, oilfield tubular goods have been developed which can be plastically radially expanded from their initial diameters after being installed for the intended application. See for example, R. D. Mack et al, *How in situ Expansion Affects Casing and Tubing Properties,* World Oil, July 1999, Gulf Publishing Co., Houston, TX, for a description of plastically radially expanding oilfield tubular goods. This article is incorporated by reference in its entirety. In particular, this article discusses the use of plastically radially expandable tubular goods. Plastically radially expandable tubular goods have particular application as casing in oil and gas producing wells. It has been difficult to seal plastically radially expandable tubular connections using metal-to-metal seals known in the art.

### Summary of Invention

The invention is a plastically radially expansible conduit connection or coupling as substantially described in EP 1 106 778. The connection described in EP 1 106 778 includes a first sealing surface disposed proximal to an end of a pin member of the connection, and it includes a corresponding second sealing surface disposed proximal to an end of a box member of the connection. The first and said second sealing surfaces are substantially opposite each other upon connection of the pin and box members. According to the invention, the connection also includes a first locking surface proximal to the sealing surface on the pin member and a second locking surface proximal to the second sealing surface on the box member. The first and second sealing surfaces and the first and second locking surfaces each having a diameter such that prior to plastic radial expansion of the box member and the pin member the locking surfaces are proximal to each other and do not contact each other, and after plastic radial expansion the first and the second sealing surfaces develop a contact pressure, and the first and second locking surfaces are engaged.

### Brief Description of Drawings

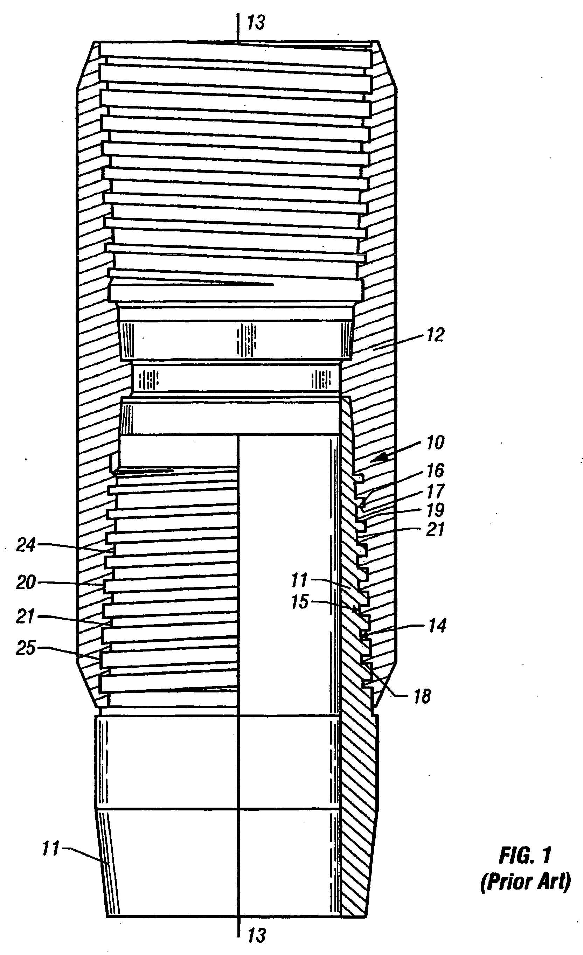

Figure 1 shows a prior art tubular threaded connection.

Figure 2 shows one embodiment of a connection seal of the invention prior to plastic radial expansion of the tubular joints and connection.

Figure 3 shows one embodiment of a connection seal of the invention after plastic radial expansion of the tubular joints and connection.

Figure 4 shows one embodiment of a connection of the invention that is being plastically radially expanded.

Figure 5 shows one embodiment of a casing string that is being plastically radially expanded.

Figure 6A shows a top view cross-section of one embodiment of clearance surfaces of the invention prior to plastic radial expansion.

Figure 6B shows a top view cross-section of one embodiment of clearance surfaces of the invention after plastic radial expansion.

Figure 7A shows one embodiment of clearance surfaces of the invention prior to plastic radial expansion

Figure 7B shows one embodiment of clearance surfaces of the invention after plastic radial expansion.

Figure 8 shows one embodiment of clearance surfaces of the invention after plastic radial expansion.

### Detailed Description

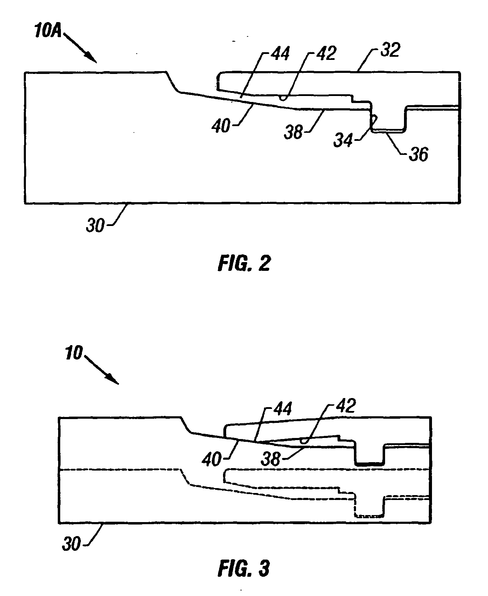

Figure 2 shows one example of a tubular connection 10A as used on plastically radially expandable tu bular goods. The example shown in Figure 2 is for a threaded coupling. Figure 2 is a cross -section through only one side of the threaded tubular connection 10A, and the view shown in Figure 2 should therefore be thought of as rotationally symmetric about the axis (not shown) of the tubular connection 10A. The tubular connection 10A is formed by joining a male-threaded "pin" member 30 to a female -threaded "box" member 32. The pin 30 and box 32 members have thereon corresponding threads 36 and 34, respectively, which when engaged provide axial coupling force to join tubular joints together. The threads 34, 36 can be any type known in the art for coupling together tubular goods, and may be a sealing type or a non -sealing type. The particular type of threads selected will depend, as is known in the art, on the intended use of the tubular goods being joined by the connection 10A. The type of threads is not intended to limit the invention. It should also be noted that the connection 10A can be formed wherein segments of conduit (not shown separately) include a pin at both ends and are connected by a short segment having box members at both ends, the short segment being known as a "collar". The connection 10A can also be formed wherein each segment of conduit includes therein a pin at one end and a box at the other. Either conduit connection will work with this invention.

In the example shown in Figure 2, the box member 32 includes at its thread start end a clearance surface 42 and a sealing surface 44. The pin member 30 includes thereon at the end of the threads 36 a corresponding clearance surface 38 and sealing surface 40. The clearance surfaces 38 and 42 on the pin member 30 and box member 32, respectively, each may be parallel to the axis (not shown) of the connection 10A each so as to define a generally cylindrical surface, or they may be tapered. Similarly, the sealing surfaces 40 and 44 may be parallel, but the sealing surfaces 40, 44 are preferably tapered as shown in Figure 2. In the invention, the clearance between the clearance surfaces 38, 42 is greater than the clearance between the sealing surfaces 40, 44 prior to plastically radial expansion of the pin member 30 and box member 32. The additional clearance between the clearance surfaces 38, 42 results in a radially-inward deformation of the seal surface area (particularly seal surface 44) on the box 32 when the box 32 is plastically radially expanded, which results in a high contact pressure between the sealing surfaces 40, 44. In the embodi ment shown in Figure 2, the clearance surface 42 on the box 32 has a larger internal diameter than does the seal surface 40 on the box 32 to provide the larger clearance between corresponding clearance surfaces 38, 42 than the corresponding seal surfaces 40, 44. It is also possible to provide larger clearance between the clearance surfaces 38, 42 by making the clearance surface 42 on the pin 30 with a smaller external diameter than the sealing surface 44 on the pin 30. Any other combination of internal diameters on the box surfaces 38, 40 and external diameters on the pin surfaces 42, 44 which provides larger clearance between corresponding clearance surfaces 3 8, 42 will also work with the invention.

Although Figure 2 shows the sealing surfaces 40, 44 as having a small amount of clearance between them prior to radial expansion of the pin 30 and box 32, the sealing surfaces 40, 44 may also be in interference contact with each other. Where the sealing surfaces 40, 44 are in interference contact prior to plastically radial expansion, after radial expansion the sealing surfaces 40, 44 will contact each other at a higher contact pressure than prior to expansion as long as the clearance surfaces 38, 42 remain out of contact after expansion.

The amount of clearance between the clearance surfaces 38, 42 prior to plastically radial expansion will depend on, among other factors, the amount of radial expansion to be applied to the pin 30 and box 32 and the pre-expansion diameter of the pin 30 and box 32. Generally, la rge clearance where the amount of expansion is small, or small clearance where the amount of expansion is to be large are not highly desirable. A preferred amount of clearance between the sealing surfaces is about 30 to 40 percent of the amount of plastic expansion to be applied, although other clearances will work with the invention, including an interference fit, as previously explained. A preferred pre-expansion clearance for the clearance surfaces is about 50 to 55 percent of the amount of plastic rad ial expansion, although other clearances will work with the invention. The important aspect is that the clearance surfaces 38, 42 retain some clearance therebetween after radial expansion of the box 32 and pin 30.

Figure 3 shows the connection 10A after plastic radial expansion of the pin 30 and box 32. As can be seen in Figure 3, the sealing surfaces 40, 44 have been put into sealing contact with each other by reason of the plastic radial expansion of the pin 30 and box 32. The clearance surfaces 38, 42 do not come into contact with each other as a result of the plastic radial expansion of the pin 30 and box 32.

While the embodiment of the invention described herein includes a threaded coupling for joining segments of conduit, the invention does not require the use of threaded couplings. For example, J -slot connectors including locking pins on the pin end, with corresponding slots on the box end could provide axial coupling force to hold the pin and box together. Other types of couplings which do not use mating threads can also be devised by those skilled in the art.

In general, there are two primary types of methods for plastically radially expanding tubular goods. The first is a "cone" or "pig" type expansion, and the second is a "rotary" type expansi on.

"Cone" or "pig" type expansion includes using a forming die that is moved through a tubular member in an axial direction. The forming die is larger than the inside diameter of the tubular member, and the forming die causes the tubular member to plastically radially expand as the die moves through the tubular member.

"Rotary" type expansion methods use a forming die that includes rotatable rollers. A rotary type die is also larger than the inside diameter of the tubular member, and it is rotated as it is forced through the tubular member in an axial direction. The combination of axial and torsional forces causes the tubular member to plastically radially expand as the die moves through the tubular member.

With rotary expansion, the forming die typically is rotated "to the right," which means in a clockwise direction looking down the hole. Right-handed rotation is the standard direction for oilfield drillstrings. During rotary expansion, the right-hand rotation of the forming die will tend to loosen, or "break-out," right-handed threads in the tubular connections, such as well casing. For this reason, expandable casing that is to be expanded using rotary methods typically are connected using left -handed threads.

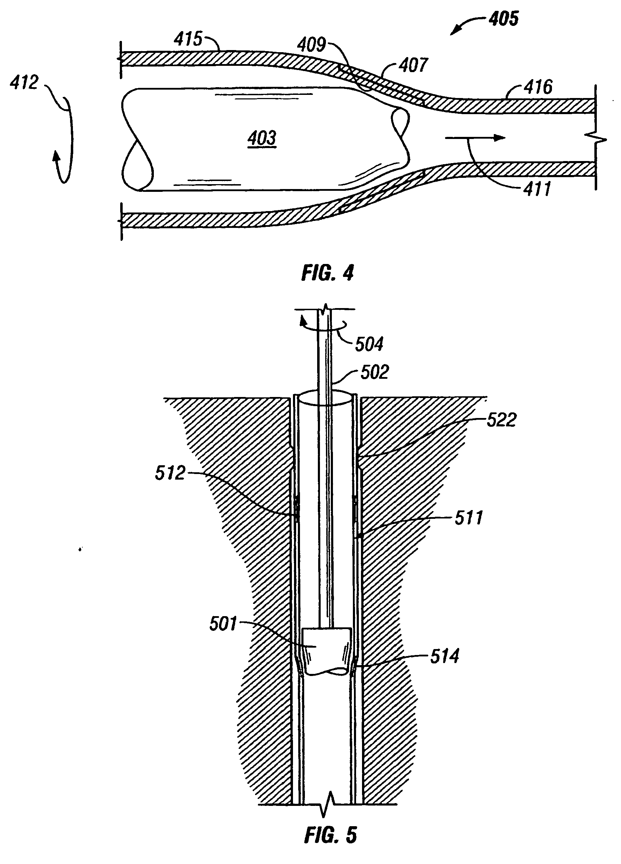

During the expansion process, the form ing die typically passes through each connection from pin to box. Figure 4 shows a forming die, or "roller" 403, as it passes through a threaded connection 405. The roller 403 passes through the connection 405, which, in this embodiment, is comprised of a pin member 415 and a box member 416. In this embodiment, the roller 403 passes from the pin member to the box member 416. This direction of movement is called "pin-to-box."

As the roller 403 moves pin -to-box, a pin member threaded section 409 is plastically radially expanded. This expansion pushes the pin member threaded section 409 into a box member threaded section 407, causing the box member threaded section 407 to also plastically radially expand. Expansion also tends to axially stretch the tubular members 415, 416 and the connections (e.g., 405 in Figure 4). The pin member threaded section 409, because it has a smaller diameter than the box member threaded section 407, tends to stretch in the axial direction more than the box member threaded se ction 407 does. As a result, gaps develop between the threads (not shown), and the torsional preload on the connection 405 is reduced.

When the roller 403 moves axially into contact with the inside diameter of the box member 416, the rotation of the roller 403 along with the reduced preload in the connection may cause the box member 416 to rotate with respect to the pin member 415. In a right -handed connection, the right-handed rotation of the roller 403 would cause the box member 416 to unscrew, or "back off." In a left-handed connection, the rotation of the roller 403 would cause the box member 416 to screw together, or "make -up."

Connections in a casing string that have already been plastically radially expanded also may be susceptible to relative rota tion. The gaps created between the threads during the expansion process, along with the rotation of the roller as it moves away from an expanded connection, may cause undesirable relative rotation in connections after the expansion process.

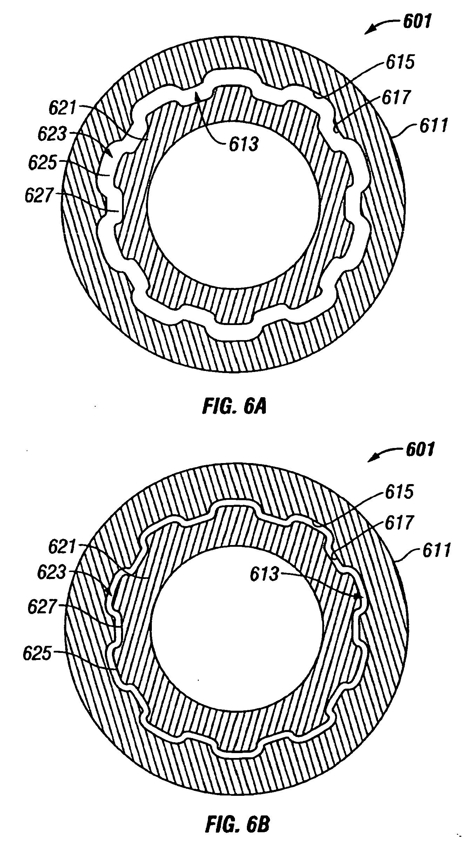

Figure 5 shows a roller 501 that is being run downward through a casing string 511 in a borehole. A drillstring 502 is used to rotate the roller 501 in a right-handed direction (shown by arrow 504). Figure 5 shows the roller 501 as a lower connection 514 is expanded.

As described above, an upper connection 512 that has been previously expanded by the roller 501 also may experience relative rotation between the pin and box member of that connection 512. In particular, this may occur when the casing 511 is trapped by an obstruction 522 in the formation that prevents the free rotation of the casing string 511. In contrast to the above, where a left-handed threaded connection that is being presently expanded will make-up due to the right-hand rotation of a roller, a previously expanded left-handed threaded connection will tend to back-off due to the rotation of the roller. Thus, in this embodiment, if the upper connection 512 is a left -handed connection, the rotation of the roller 501 will cause the upper connection to ba ck-off. On the other hand, if the upper connection 512 is a right -handed connection, the rotation of the roller 501 will cause the upper connection 512 to make-up.

Figure 5 shows a roller 501 that moves downward through a casing string 511. Those having ordinary skill in the art will realize that the roller 501, in certain embodiments, could move upward through the casing string 511. In that case, a lower connection may experience relative rotation as the roller 501 moves upward through the casing string 511 and upper connections. No limitation is intended by a description of the direction of roller movement.

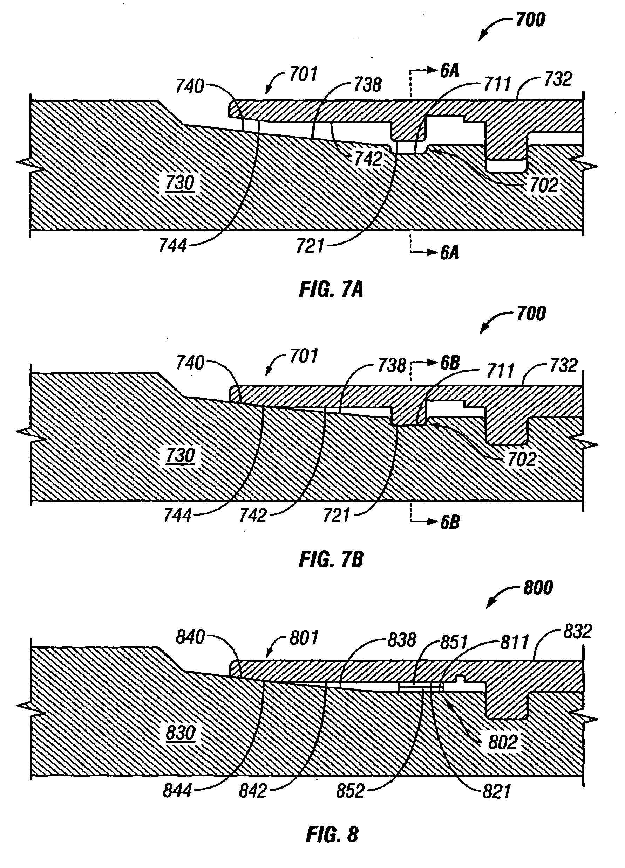

Figure 6A shows one embodiment of an anti -rotation device 601 in accordance with an embodiment of the invention. Figure 6A shows a cross-section taken through section A-A in Figure 7A. The box member 611 and the pin member 621 are shown prior to plastic radial expansion. The box member 611 has a locking surface 613. In the embodiment shown, the box member locking surface 613 is knurled so that it includes peaks 617 and grooves 615. The pin member 621 also includes a locking surface 613. The pin member locking surface 623 is similarly knurled to include corresponding peaks 625 and grooves 627.

Prior to expansion, the peaks 625 on the pin member locking surface 623 and the peaks 617 on the box member locking surface 613 have diameters selected such that they will not contact each other. This enables the pin member 612 and the box member 611 to rotate with respect to each other during, for example, initial make-up of the connection.

Figure 6B shows one embodiment of an anti -rotation device 601 after plastic radial expansion. The peaks 625 and grooves 627 of the pin member locking surface 623 engage with corresponding peaks 617 and grooves 615 of the box member locking surface 613. This engagement prevents relative rotation between the pin member 621 and the box member 611. It is noted that in some embodiments, such as the one shown in Figure 6B, although the peaks 625 and grooves 627 of the pin me mber locking surface 623 are "engaged" with corresponding peaks 617 and grooves 615 of the box member locking surface 613, the pin member locking surface 623 is not in contact with the box member locking surface 613. If the box member 611 were to be rotated, it would cause rotational contact between the peaks 617, 625 of the locking surfaces 613, 623. The contact between the peaks 625 of the pin member locking surface 623 and the peaks 617 of the box member locking surface 613 would prevent relative rotation. Such contact would be caused by relative rotation of the pin member 621 and the box member 611 and not by the radial expansion of the connection. In some other embodiments, there is contact between the locking surfaces 613, 623 after plastic radial expansion.

Figure 7A shows a cross -section of a connection 700 with a collapsible seal 701 and an anti-rotation device 702 prior to plastic radial expansion. The pin member 730 includes a first sealing surface 740 and a first clearance surface 738. The pin member also includes a first locking surface 711 disposed proximal the first sealing surface and the first clearance surface. The first locking surface 711 is knurled, and the section shown in Figure 7A includes a groove. Likewise, the box member 732 has a second sealing surface 744 and a second clearance surface 742. A second locking surface 721 is disposed proximal to the second sealing surface 744 and the second clearance surface 742. The second locking surface 721 is also knurled, and the section shown in Figure 7A includes a peak.

It is notes that the knurled locking surfaces 711, 721 each contain peaks and grooves. In the embodiment shown in Figure 7A, the cross-section is taken at a point where there is a groove in the first locking surface 711 and a peak in the second locking surface 721. A cross -section at a different point may show a peak in the first locking surface and a groove in the second locking surface.

Figure 7B shows a cross -section of an embodiment a connection 700 after plastic radial expansion of the pin member 730 and the box member 732. As was discussed above with reference to Figure 3, the second sealing surface 744 on the box member 732 has collapsed to be in sealing contact with the first sealing surface 740 on the pin memb er 730. In the embodiment shown, the clearance surfaces 73 8, 742 remain out of contact.

Figure 7B shows that the first locking surface 711 in engaged with the second locking surface 721. Because the locking surfaces 711, 721, in the embodiment shown, have an alternating peak/groove pattern, the engagement between them prevents relative rotation between the pin member 730 and the box member 732.

In other embodiments, an anti -rotation device may comprise flutes on the locking surfaces or high friction coati ngs on the locking surfaces, such as a plasma-spray carbide. Those having ordinary skill in the art will realize that anti-rotation devices other than a knurled surface may be used without departing from the scope of the invention.

In some embodiments the locking surfaces may include coatings that are in contact after plastic radial expansion. Figure 8, for example, shows a cross-section of an embodiment of a threaded connection 800 with a collapsible type seal 801 and locking surfaces 811, 821 with coati ngs 851, 852 that contact each other after plastic radial expansion. A first sealing surface 840 is in sealing contact with a second sealing surface 844, and the first clearance surface 838 and the second clearance surface 842 remain out of contact. The first coating 852 on the first locking surface 811 and the second coating 851 on the second locking surface 821 are in contact with each other. In some embodiments, the coatings 851, 852 are high friction coatings that resist relative rotation between the pin member 830 and the box member 832.

Those having ordinary skill in the art will be able to devise other embodiments of locking surfaces and anti -rotation devices that do not depart from the scope of the present invention. For example, In some embodiments, a connection with a anti-rotation device does not include clearance surfaces. While the embodiments shown include clearance surfaces, those having ordinary skill in the art will realize the they are not required by the present invention.

Advantageously, embodiments of the present invention that include an anti-rotation device enable the plastic radial expansion of tubular goods using rotary expansion techniques without relative rotation between the pin member and the box member. Further, certain embodiments prevent the relative rotation of previously expanded connections by the rotation of a rotary expansion tool, such as a roller.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A plastically radially expansible conduit connection (10, 10A, 700, 800), comprising:
a first sealing surface (40, 740, 840) disposed proximal to an end of a pin member (30, 621, 730, 830) of the connection (10, 10A, 700, 800);
a second sealing surface (44, 744, 844) disposed proximal to an end of a box member (32, 611 732, 832) of the connection (10, 10A, 700, 800), the first (40, 740, 840) and the second (44, 744, 844) sealing surfaces substantially opposite each other upon connection of the box member (32, 732, 832) and pin member (30, 730, 830);
the first (40, 740, 840) and second sealing surfaces (32, 732, 832) each having a diameter such that after plastic radial expansion the first (40, 740, 840) and the second (44, 744, 844) sealing surfaces develop a contact pressure,
**characterized by** the plastically radially expansible conduit connection (10, 10A, 700, 800) having
a first locking surface (613, 711, 811), proximal to the sealing surface (40, 740, 840) on the pin member (30, 621, 730, 830); and
a second locking (623, 721, 821), surface proximal to the second sealing surface (44, 744, 844) on the box member (32, 611 732, 832);
and the first (613, 711, 811) and second (623, 721, 821) locking surfaces each having a diameter such that prior to plastic radial expansion of the box member (32, 611 732, 832) and the pin member (30, 621, 730, 830) the locking surfaces (613, 711, 811; 623, 721, 821) are proximal to each other and do not contact each other, and after plastic radial expansion the first (613, 711, 811) and second locking (623, 721, 821) surfaces are engaged, and prevent relative rotation between the pin member (30, 621, 730, 830) and the box member (32, 611 732, 832).

2. The plastically radially expansible conduit connection (10, 10A, 700, 800) of claim 1, further comprising a first clearance surface (38, 738, 838) disposed on the pin member (30, 621, 730, 830) between the first sealing surface (40, 740, 840) and the first locking surface (613, 711, 811), and a second clearance surface (42, 742, 842) disposed on the box member (32, 611 732, 832) between the second sealing surface (32, 732, 832) and the second locking surface (623, 721, 821), wherein the first (38, 738, 838) and second (42, 742, 842) clearance surfaces each have a diameter such that prior to plastic radial expansion of the pin member (30, 621, 730, 830) and the box member (32, 611 732, 832) the first (38, 738, 838) and second (42, 742, 842) clearance surfaces do not contact each other, and after plastic radial expansion of the pin member (30, 621, 730, 830) and the box member (32, 611 732, 832) the first (38, 738, 838) and second (42, 742, 842) clearance surfaces remain out of contact.

3. The plastically radially expansible conduit connection (10, 10A, 700, 800) of claim 1, wherein at least one of the first locking surface (613, 711, 811) and the second locking surface (623, 721, 821) comprises a knurled surface (613, 623).

4. The plastically radially expansible conduit connection (10, 10A, 700, 800) of claim 1, wherein at least one of the first locking surface (613, 711, 811) and the second locking surface (623, 721, 821) comprises flutes.

5. The plastically radially expansible conduit connection (10, 10A, 700, 800) of claim 1, further comprising a coating (851, 852) disposed on one of the first locking surface (613, 711, 811) and the second locking surface (623, 721, 821), and wherein after plastic radial expansion of the pin member (30, 621, 730, 830) and the box member (32, 611 732, 832) the coating contacts the other of the first locking surface (613, 711, 811) and the second (623, 721, 821) locking surface.

6. The plastically radially expansible conduit connection (10, 10A, 700, 800) of claim 1, further comprising a first coating (852) disposed on the first locking surface (613, 711, 811) and a second coating (851) disposed on the second locking surface (623, 721, 821), and wherein after plastic radial expansion of the pin member (30, 621, 730, 830) and the box member (32, 611 732, 832) the first coating and the second coating (851, 852) are in contact.

7. The plastically radially expansible conduit connection (10, 10A, 700, 800) of claim 6, wherein the first coating and the second coating (851, 852) comprise a high friction coating.

## Patentansprüche

1. Plastisch radial erweiterbare Rohr- bzw. Leitungsverbindung (10, 10A, 700, 800), umfassend:
eine erste Dichtfläche (40, 740, 840), angeordnet nah bzw. proximal zu einem Ende eines Bolzen- bzw. Zapfenbauteiles (30, 621, 730, 830) der Verbindung (10, 10A, 700, 800);
eine zweite Dichtfläche (44, 744, 844), angeordnet nah bzw. proximal zu einem Ende eines Gehäuse- bzw. Buchsenbauteiles (box element) (32, 611, 732, 832) der Verbindung (10, 10A, 700, 800), die erste (40, 740, 840) und die zweite (44, 744, 844) Dichtfläche liegen im wesentlichen einander an der Verbindung des Gehäuse- bzw. Buchsenbauteiles (32, 732, 832) und des Bolzen- bzw. Zapfenbauteiles (30, 730, 830) gegenüber;
die erste (40, 740, 840) und die zweite Dichtfläche (32, 732, 832) weisen jede einen Durchmesser derart auf, dass nach einer plastischen radialen Erweiterung bzw. Aufweitung die erste (40, 740, 840) und die zweite (44, 744, 844) Dichtfläche einen Anpressdruck ausbilden,
**dadurch gekennzeichnet, dass** die plastisch radial erweiterbare Rohr- bzw. Leitungsverbindung (10, 10A, 700, 800)
eine erste Verriegelungsfläche (613, 711, 811), nah bzw. proximal zur Dichtfläche (40, 740, 840) am Bolzen- bzw. Zapfenbauteil (30, 621, 730, 830); und
eine zweite Verriegelungsfläche (623, 721, 821), nah bzw. proximal zur zweiten Dichtfläche (44, 744, 844) am Gehäuse- bzw. Buchsenbauteil (32, 611, 732, 832) aufweist; und
die erste (613,711,811) und die zweite (623, 721, 821) Verriegelungsfläche jede einen Durchmesser derart aufweist, dass vor der plastischen radialen Aufweitung des Gehäuse- bzw. Buchsenbauteiles (32, 611, 732, 832) und des Bolzen- bzw. Zapfenbauteiles (30, 621, 730, 830) die Verriegelungsflächen (613, 711, 811; 623, 721, 821) nahe zueinander sind und nicht in Kontakt miteinander stehen und nach der plastischen radialen Erweiterung die erste (613, 711, 811) und die zweite (623, 721, 821) Verriegelungsfläche in Kontakt gebracht werden bzw. eingekuppelt werden und eine relative Verdrehung zwischen dem Bolzen- bzw. Zapfenbauteil (30, 621, 730, 830) und dem Gehäuse- bzw. Buchsenbauteil (32, 611, 732, 832) verhindern.

2. Plastisch radial erweiterbare Rohr- bzw. Leitungsverbindung (10, 10A, 700, 800) gemäß Anspruch 1, des weiteren umfassend, eine erste Abstandsfläche (38, 738, 838) angeordnet am ersten Bolzen- bzw. Zapfenbauteil (30, 621, 730, 830) zwischen der ersten Dichtfläche (40, 740, 840) und der ersten Verriegelungsfläche (613, 711, 811), und eine zweite Abstandsfläche (42, 742, 842), angeordnet am Gehäuse- bzw. Buchsenbauteil (32, 611, 732, 832) zwischen der zweiten Dichtfläche (32, 732, 832) und der zweiten Verriegelungsfläche (623, 721, 821), wobei die erste (38, 738, 838) und die zweite (42, 742, 842) Abstandsfläche jede einen Durchmesser derart aufweist, dass vor der plastischen radialen Erweiterung des Bolzen- bzw. Zapfenbauteiles (30, 621, 730, 830) und des Gehäuse- bzw. Buchsenbauteiles (32, 611, 732, 832) die erste (38, 738, 838) und die zweite (42, 742, 842) Abstandsfläche nicht in Kontakt miteinander stehen und nach der plastischen radialen Erweiterung des Bolzen- bzw. Zapfenbauteiles (30, 621, 730, 830) und des Gehäuse- bzw. Buchsenbauteiles (32, 611, 732, 832) die erste (38, 738, 838) und die zweite Abstandsfläche (42, 742, 842) außer Kontakt bleiben.

3. Plastisch radial erweiterbare Rohr- bzw. Leitungsverbindung (10, 10A, 700, 800) gemäß Anspruch 1, worin wenigstens eine von der ersten Verriegelungsfläche (613, 711, 811) und der zweiten Verriegelungsfläche (623, 721, 821) eine gerändelte Oberfläche (613, 623) aufweist.

4. Plastisch radial erweiterbare Rohr- bzw. Leitungsverbindung (10, 10A, 700, 800) gemäß Anspruch 1, worin wenigstens eine von der ersten Verriegelungsfläche (613, 711, 811) und der zweiten Verriegelungsfläche (623, 721, 821) Nuten aufweist.

5. Plastisch radial erweiterbare Rohr- bzw. Leitungsverbindung (10, 10A, 700, 800) gemäß Anspruch 1, des weiteren umfassend einen Belag (851, 852), angeordnet an einer der ersten (613, 711, 811) oder zweiten (623, 721, 821) Verriegelungsfläche und wobei nach der plastischen radialen Erweiterung des Bolzen- bzw. Zapfenbauteiles (30, 621, 730, 830) und des Gehäuse- bzw. Buchsenbauteiles (32, 611, 732, 832) der Belag die andere der ersten (613, 711, 811) und zweiten (623, 721, 821) Verriegelungsfläche kontaktiert bzw. berührt.

6. Plastisch radial erweiterbare Rohr- bzw. Leitungsverbindung (10, 10A, 700, 800) gemäß Anspruch 1, des weiteren umfassend einen ersten Belag (852), angeordnet an der ersten Verriegelungsfläche (613, 711, 811) und einen zweiten Belag (851), angeordnet an der zweiten Verriegelungsfläche (623, 721, 821), und worin nach der plastischen radialen Erweiterung des Bolzen- bzw. Zapfenbauteiles (30, 621, 730, 830) und des Gehäuse- bzw. Buchsenbauteiles (32, 611, 732, 832) der erste Belag und der zweite Belag (851, 852) miteinander in Kontakt stehen.

7. Plastisch radial erweiterbare Rohr- bzw. Leitungsverbindung (10, 10A, 700, 800) gemäß Anspruch 6, worin der erste und der zweite Belag (851, 852) einen Hochreibungsbelag beinhalten.

## Revendications

1. Raccord de conduit dilatable plastiquement radialement (10, 10A, 700, 800), comprenant
une première surface d'étanchéité (40, 740, 840) disposée de manière proximale par rapport à une extrémité d'un organe broche (30, 621, 730, 830) du raccord (10, 10A, 700, 800),
une seconde surface d'étanchéité (44, 744, 844) disposée de manière proximale à une extrémité d'un organe boîte (32, 611, 732, 832) du raccord (10, 10A, 700, 800), les premières (40, 740, 840) et secondes (44, 744, 844) surfaces d'étanchéité étant opposées mutuellement sur le raccord de l'organe boîte (32, 732, 832) et de l'organe broche (30, 730, 830);
les premières (40, 740, 840) et secondes (44, 744, 844) surfaces d'étanchéité ayant chacune un diamètre de sorte qu'après la dilatation radiale plastique, les premières (40, 740, 840) et secondes (44, 744, 844) surfaces d'étanchéité développent une pression de contact
**caractérisé par** le raccord de conduit (10, 10A, 700, 800) dilatable plastiquement radialement ayant une première surface de verrouillage (613, 711, 811), proximale à la surface d'étanchéité (40, 740, 840) sur l'organe broche (30, 621, 730, 830); et
une seconde surface de verrouillage (623, 721, 821) proximale à la seconde surface d'étanchéité (44, 744, 844) sur l'organe boîte (32, 611, 732, 832);
et les premières (613, 711, 811) et secondes (623, 721, 821) surfaces de verrouillage présentant un diamètre de sorte qu'avant la dilatation radiale plastique de l'organe boîte (32, 611, 732, 832) et de l'organe broche (30, 621, 730, 830), les surfaces de blocage (613, 711, 811; 623, 721, 821) sont proximales entre elles et ne sont pas en contact entre elles et après la dilatation radiale plastique, les premières (613, 711, 811) et secondes (623, 721, 821) surfaces de verrouillage sont engagées et empêchent une rotation relative entre l'organe broche (30, 621, 730, 830) et l'organe boîte (32, 611, 732, 832).

2. Raccord de conduit dilatable plastiquement radialement (10, 10A, 700, 800) de la revendication 1, comprenant en outre une première surface de jeu (38, 738, 838) disposée sur l'organe broche (30, 621, 730, 830) entre la première surface d'étanchéité (40, 740, 840) et la première surface de blocage (613, 711, 811) et une seconde surface de jeu (42, 742, 842) disposée sur l'organe boîte (32, 611, 732, 832) entre la seconde surface d'étanchéité (32, 732, 832) et la seconde surface de blocage (623, 721, 821) dans lequel les premières (38, 738, 838) et secondes (42, 742, 842) surfaces de jeu présentent chacune un diamètre de sorte qu'avant la dilatation radiale plastique de l'organe broche (30, 621, 730, 830) et de l'organe boîte (32, 611, 732, 832), les premières (38, 738, 838) et secondes (42, 742, 842) surfaces de jeu ne sont pas en contact entre elles et après la dilatation radiale plastique de l'organe broche (30, 621, 730, 830) et de l'organe boîte (32, 611, 732, 832), les premières (38, 738, 838) et secondes (42, 742, 842) surfaces de jeu restent éloignées les unes des autres.

3. Raccord de conduit dilatable plastiquement radialement (10, 10A, 700, 800) de la revendication 1, dans lequel au moins une des premières surfaces de verrouillage (613, 711, 811) et des secondes surfaces de verrouillage (623, 721, 821) comprend une surface moletée (613, 623).

4. Raccord de conduit dilatable plastiquement radialement (10, 10A, 700, 800) de la revendication 1, dans lequel au moins une des premières surfaces de verrouillage (613, 711, 811) et des secondes surfaces de verrouillage (623, 721, 821) comprend des cannelures.

5. Raccord de conduit dilatable plastiquement radialement (10, 10A, 700, 800), comprenant en outre un revêtement (851, 852) disposé sur une des premières surfaces de verrouillage (613, 711, 811) et des secondes surface de verrouillage (623, 721, 821) et dans lequel après la dilatation radiale plastique de l'organe broche (30, 621, 730, 830) et de l'organe boîte (32, 611, 732, 832), le revêtement contacte l'autre des premières surfaces de verrouillage (613, 711, 811) et des secondes surfaces de verrouillage (623, 721, 821).

6. Raccord de conduit dilatable plastiquement radialement (10, 10A, 700, 800), comprenant en outre un premier revêtement (852) disposé sur les premières surfaces de verrouillage (613, 711, 811) et un second revêtement (851) sur les secondes surfaces de verrouillage (623, 721, 821) et dans lequel après la dilatation radiale plastique de l'organe broche (30, 621, 730, 830) et de l'organe boîte (32, 611, 732, 832), le premier revêtement et le second revêtement (851, 852) sont en contact.

7. Raccord de conduit dilatable plastiquement radialement (10, 10A, 700, 800) de la revendication 1, dans lequel le premier revêtement et le second revêtement (851, 852) comprennent un revêtement à friction élevée.
